# EUROPEAN PATENT APPLICATION

(11) **EP 1 014 316 A1**
(43) Date of publication of application: **28.06.2000**
(21) Application number: 98204449.7
(22) Date of filing: 24.12.1998
(51) Int. Cl.: G07F 7/10

(54) **Transaction server framework**

(71) Applicant: Koninklijke KPN N.V., 9726 AE Groningen (NL)
(72) Inventor: Van Bruchem, Dirk Jan Jacobus, 2291 NM Wateringen (NL); David, Sandy Joseph, 2561 AW The Hague (NL); Koele, Christiaan Marinus, 2986 EE Ridderkerk (NL); Kesselring, Johan, 3051 AC Rotterdam (NL)
(74) Representative: Klein, Bart

(57) **Abstract**

Transaction server and method for carrying out at least one transaction upon request by at least one remote system (2; 8; 20), based on the following processes:
- at least one application process related to the transaction;
- an interfacing process for interfacing between said at least one remote system (2; 8; 20) and said at least one application process;
- a first starting process for starting processes in a first group of processes which all have a specific non-applicational supporting task;
- a second starting process which is started by the first starting process and is arranged for starting processes in a second group of processes which are related to a requested transaction and form a configurable part of the server software.

## Description

The present invention relates to a transaction server for carrying out at least one transaction upon request by at least one remote system, comprising:
- starting means for starting at least one application process upon receiving a transaction request;
- interface means for interfacing between said at least one remote system and said at least one application process.

US-A-4,908,746 discloses a control system allowing multiple tasks to operate on data originating from a plurality of processes. To that end, one or more local programmable logic controllers are arranged for measuring and controlling changing values of one or more parameters, like water level and temperature. Also process controllers, robotic systems, and numerical control machines may be provided for. There is one central, multitasking processor which can communicate with all these devices through a communication processor. The central processor comprises a central real-time database and is, e.g., loaded with suitable software to perform several tasks. Examples of tasks are: communicating, supervising alarm conditions, calculating, performing clock functions and handling data. All of these tasks are only allowed to transfer data with one another through the real-time database. When one of the tasks need data from, e.g., one of the process controllers data is transferred from that controller through the communication processor to the real-time database. Since inter-task communication must always take place through the real-time database, a new task can be simply added without any detrimental effect on any other existing task.

The object of the present invention is provide a transaction server allowing a plurality of transaction requests to be served in parallel and which is designed such that expanding and adapting the system is relatively easy.

To that end, the starting means of the transaction server defined at the outset comprises:
- first starting means for starting processes in a first group of processes which all have a specific non-applicational supporting task;
- second starting means which is started by the first starting means and is arranged for starting one or more processes in a second group of processes which are related to the transaction request and form a configurable part of the server software.

By dividing the starting means into two distinct starting means, wherein the first starting means only relates to non-applicational supporting tasks and the second starting means only relates to application(s) to be carried out by the server to handle the requested transaction, processes within the second group of processes can be relatively simply amended or substituted by other ones. Also, new second group processes can be easily added. The application processes may be located within the transaction server. However, alternatively, each one of them may be located in a remote processor able to communicate with the server. The application processes may be started upon receipt of a transaction request. However, some may also run all the time.

Preferably, the second starting means are arranged for dedicating a channel in a first multichannel process for carrying out application tasks related to the transaction request.

In a further preferred embodiment, the second starting means may be arranged for starting a second multichannel process identical to said first multichannel process when all channels of the first multichannel process have been dedicated.

In a further embodiment, the transaction server comprises one or more application manager means, each one of them being arranged for interfacing between said at least one remote system and said at least one application process, and for carrying out application independent parts of a transaction request received. Such application manager means implement the application independent part of high level protocol used to communicate between a requester of a transaction and internal application processes which will perform the application specific part of the transaction. Partitioning the server this way, has the benefit that one application process can be used to handle transactions requests originating from different application manager means.

Each application is 'attached' during initialization of the application manager means, whereas the application itself is, preferably, only started when a transaction request is received. This two phase starting sequence enables the second starting means to support different configurable starting methods, e.g., direct starting from disk, forking a parent process, or starting from disk after a loading action from disk.

The transaction server according to the invention is not specifically related to chip cards but may be arranged for carrying out at least one of the following set of chipcard related transactions requests:
- to revalue an electronic purse;
- to devalue an electronic purse;
- to carry out a chipcard related identification;
- to buy a ticket, and
- to save bonus points.

The present invention also relates to a method for carrying out at least one transaction upon request by at least one remote system on a transaction server, comprising the following processes:
- a starting process for starting at least one application process upon receiving a transaction request;
- an interfacing process for interfacing between said at least one remote system and said at least one application process;
   wherein said starting process comprises:
- a first starting process for starting processes in a first group of processes which all have a specific non-applicational supporting task;
- a second starting process which is started by the first starting process and is arranged for starting one or more processes in a second group of processes which are related to the transaction request and form a configurable part of the server software.

Further beneficial embodiments of both the server and the method according to the invention are claimed in the dependent claims.

Below, a detailed description of the invention will be given with reference to some drawings which are only intended to illustrate the invention and not to limit its scope.
Figure 1 shows a general overview of a telecommunication system with a transaction server arranged for handling chipcard related transaction requests;
Figure 2 shows a schematic diagram of a server configuration hierarchy;
Figure 3 schematically shows interactions of database managing;
Figure 4 schematically shows a stack communication model for a protocol between a remote system and an application manager process;
Figure 5 schematically shows application managing process interfaces;
Figure 6 schematically shows mechanisms for claiming and releasing inside and outside connections;
Figure 7 schematically shows high level mailbox operations;
Figure 8 schematically shows an example of second group processes involved in carrying out tasks for handling a transaction request;
Figures 9a through 9d show flow diagrams of steps carried out by the transaction server when handling a transaction request; figure 9a shows the steps carried out by the application manager; figure 9b shows an initialisation step carried out by a recourse manager; figure 9c shows initialisation steps carried out by an application process; figures 9d and 9e show initialisation steps carried out by further recourse managers; and figure 9f shows steps carried out during a transaction processing;
Figure 10 shows transaction server components involved in a revalue purse application and
Figure 11 shows processes involved in a devalue purse application.

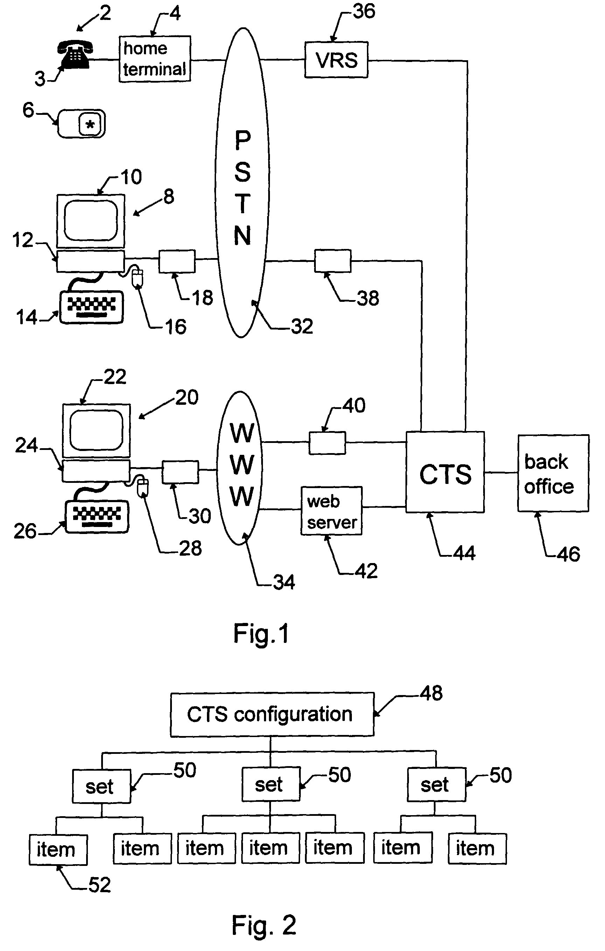

In the general overview of the telecommunication system given in figure 1, reference numbers 2, 8, and 20 refer to possible remote systems able to communicate with a chipcard 6 and to support chipcard related transaction requests. To that end these remote systems 2, 8, 20 are provided with suitable means for reading data from and writing data to chipcard 6.

Remote system 2 comprises a telephone 3 connected to the public switched telephone network PSTN 32 through a home terminal 4.

Remote system 8 comprises a personal computer, provided with a processor 12, a monitor 10, a keyboard 14 and a mouse 16. The processor 12 is connected to PSTN 32 through a modem 18.

Remote system 20 comprises a personal computer, provided with a processor 24, a monitor 22, a keyboard 26 and a mouse 28. The processor 24 is connected to Internet WWW 34 through a modem 30.

A chipcard transaction server CTS 44 is connected to both PSTN 32 and WWW 34 through suitable interfacing means: voice response system 36, modem 38, modem 40, and WEB server 42, as shown in figure 1.

Reference number 46 refers to a back office, e.g., a bank, for providing necessary resources for requested transactions.

It is observed that figure 1 shows just some examples of devices able to communicate with chipcard 6 and to support chipcard related transactions. Any equivalent or alternative is intended to fall within the scope of the present claims.

Below, a detailed description of a possible embodiment of the invention is given. The embodiment relates to a transaction server able to handle transaction requests from a chipcard communicating with some kind of chipcard terminal which itself is communicating with the transaction server. However, the present invention is not limited to such an embodiment, but is applicable outside the field of chipcard related transactions.

### 1. Requirements and constraints

### 1.1 Imposed requirements

This section contains a list of requirements which have an impact on the software architecture of the transaction server 44. It is noted that only in the most preferred embodiment, all requirements have to be met.
- R1.: The system must be capable of handling different Chipcard terminal types (e.g., Telechipper® , Washington 50 and LineChipper®).
- R2.: Target platform is preferably Intel based and runs preferably the operating system SCO UNIX (although the invention will be explained using a UNIX context, any other operating system might be used).
- R3.: a voice response system (VRS) is an option of the system to develop.
- R4.: There is possibly more than one source which can activate an application.
- R5.: Complete applications or parts of applications can be situated outside the boundary of the system to develop.
- R6.: The system to develop must be able to support several versions of an application.
- R7.: The system must be capable of running a number of the same and different applications concurrently.
- R8.: An application running on the system may not be disturbed by any other application running on the system.

### 1.2 Constraints deduction

This section deduces the constraints, which apply to the system to develop, from the requirements given above.
- R8 implies that the starting of an application may not cause other applications (multiple application can run concurrently (R7)) to crash or let the time that they need to complete their task increase severely.
   This means that the system must be sure that resources, such as memory, will not exhaust by the starting of an application. Furthermore, it means that swapping processes to disk, which is possible in a UNIX system (R2), should be prevented because this has a severe impact on the performance of the system.
   ⇒ Both issues can be resolved by tracking the load of the system by a so called "system manager". This system manager decides if it is allowed to start an application.
   Furthermore, the meeting of R8 is accomplished by letting each application entity run within its own context, in UNIX (R2) terms processes. However, the large number of application entities running concurrently can cause memory and context switching problems. Therefore, it might be wise to group all entities of an application into a single UNIX process. Such a process is called a Multi Channel Process (MCP).
   ⇒ It must be possible that each application entity is a UNIX process and that several or all entities of the same applications are grouped together in a MCP. The MCP mechanism should also be offered to processes which are not an application.
      Using the MCP method for application entities is in contradiction with R8. This is caused by the fact that when an application entity makes a MCP crash that all application entities contained within the MCP are crashed too. Therefore, the use of MCP for applications or not is a trade off between R8 and the lack of system resources.
- R4: If there can be multiple sources for starting applications then they probably have different interfaces and protocols for doing so.
   This can lead to complex applications if an application must be aware of the different protocols which apply for the different sources.
   ⇒ This can be resolved by decoupling the applications from the source which activates them. To do just that "application managers" are introduced. A dedicated application manager is assigned to each source which can activate applications. This application manager converts the external protocol to the internal protocol, and vice versa, and it monitors the applications which it has activated.
- R7 implies that the system is dynamic, i.e. application entities can be started and the life time of an application entity is finite.
   This means that the number of application entities, and thereby the number of application processes, can vary. There are several methods for dealing with such a variation.
   - A1.: Loading an application process from disk each time that it is needed.
   - A2.: Keeping a copy of an application process in memory and fork (R2) it when needed.
   - A3.: Keeping the maximum number of all possible application processes in memory and wake them up when needed.
   A3 has the advantage that it is the fastest method of all. But a major disadvantage might be that it needs a lot of memory. Therefore this method is probably not suitable for applications which have separate processes for each entity.
   Using A1 means that no memory is wasted on copies of application processes which are just in memory to fork themselves when a new application process must be started. A drawback of this method is that it takes some time to load an application process from disk. A2 has the advantage over A1 of saving application start-up time. But the disadvantage is that it takes up extra memory for each application which must be started using this method.
   All things said about application entities and application processes also applies to entities and processes of the other process types such as resource drivers.
   ⇒ All three process starting methods mentioned should, preferably, be offered by the chipcard transaction server software. Method A1 can be used for processes which are suspected of running just occasionally and for which a longer start-up time can be excepted. Method A2 can be used for processes which run frequently and for which short start-up times are preferred. Method A3 can be used for processes which are used continuously.
- R6 can be supported by means of the methods given below.
   - B1.: Each version of an application is an application process in its own right. This means that different versions of applications have different disk images.
   - B2.: All versions of an application are integrated in one disk image. This means that the application software has checks in it to test which version it should take action for.
   - B3.: A mixture of both methods is used. Versions which differ severely have separate disk images and versions which differ slightly are incorporated in a single disk image.
   Method B1 would be the best method from a software configuration point of view. However, at the time that the application request is received by the chipcard transaction server 44 it is not known yet which chipcard terminal version is used. Within the software architecture to be used the application request triggers the starting of the actual application. Given this it is impossible to start different versions of the application because it is not known yet which version should be running. Therefore, method B2 must be used for applications which are chipcard terminal dependent. Applications which do not depend on the chipcard terminal version can use method B1 and B2 (i.e. method B3).
- R5 implies that interfaces are needed with the outside world. Communicating with the outside can be done by a variety of methods and with a variety of protocols. At this moment it is impossible to predict which methods and protocols will be used in the future. Furthermore, it is possible that several protocol conversion need to be performed on a single data flow. If this is the case then a separate resource driver could be used for each conversion of the data flow.
   To keep all options open, and not making the applications too complex, in the most preferred embodiment, resource drivers are introduced. Resource drivers are meant to drive a resource of a particular type and convert external protocols to internal protocols and vice versa. Furthermore, if several protocol conversions need to be applied to the same data flow, it is allowed that for each conversion a separate resource driver is used.
   In most cases the number of a particular resource, such as modems, is limited. Therefore, it is possible that an application wants to make use of a resource which is exhausted. The system must be able to cope with this situation. Furthermore, it might be convenient, for service purposes, that groups of resources can be addressed as a whole.
   To make this possible, in the most preferred embodiment, resource managers are introduced. A resource manager controls the uses of the resources it manages, resources should be claimed and released. Special service commands should also be supported by resource managers, e.g., taking a modem off-line.
- As defined, the transaction server 44 will contain a collection of processes. In order for those processes to work together it is essential that processes can communicate with each other. Within the chipcard transaction server 44 software inter process communication is done by means of messages sent from one process to another process. Within this context messages are nothing more than an identifiable collection of data exchanged between two processes. In most cases a process sends a request message and it expects to receive a response some time later. During the time between the sending of the request and the reception of the response the requesting process can sit and wait for the response (synchronous communication) or it can do some processing and react to the response when it suits him (a-synchronous communication). Within the chipcard transaction server software it is desirable that each process has a single point in its program where it waits for messages to arrive. This is just fine for a-synchronous communication but for synchronous communication it is better that the process waits for the response at the point where the request was made.
   It is desirable that the chipcard transaction server software can handle different inter process communication methods.
   SCO UNIX offers a variety of ways to perform inter process communication. A collection of these methods are listed below.
   1. message queues, these are queues in which messages can be placed and from which messages can be retrieved. A message queue is identified by a system wide unique number. This makes message queues a flexible mechanism for exchanging messages between processes even if those processes are not related. Message queues might be suitable for the chipcard transaction server 44.
   2. sockets that can be used as a communication mechanism between different systems.
      * UDP sockets, such a socket is similar to message queue in the way that a process who has created a UDP socket can receive information from other processes who know the address of the UDP socket.
         These messages of other processes are all received through the single socket of the receiving process.
         The address of the UDP socket is identified by an IP address and a port number. A drawback of UDP sockets is that there is no guarantee that data sent at one end is actually received by the other end. This means that some acknowledge/retry mechanism must be built to guarantee delivery if that is required. UDP sockets might be suitable for the chipcard transaction server software.
      * TCP sockets, the difference with UDP sockets is that a TCP socket is a point to point communication channel and that it is guaranteed that data sent from one end is received at the other end of the socket. TCP sockets are suitable for the chipcard transaction server software.
   3. Signals, with this method nothing more is exchanged between processes then the signal number. Furthermore, if several identical signals are sent to a process then that process will only receive one signal. The conclusion is that signals, by itself, are not used by the chipcard transaction server software as a means of inter process communication. However, signals can be used to trigger a process to look at a certain input for more information. Meaning that signals are used by the chipcard transaction server software to notify a process that some data has arrived at one of its inputs.
   From what is described above it can be deduced that a variety of inter process communication methods may be used by the chipcard transaction server software. It is preferred that all used methods are incorporated in an abstract data structure called a mailbox. At a high level the communication is, preferably, done by means of these mailboxes. Supporting functions should be offered in a library for working with these mailboxes. Which method is actually used should be of no interest at the abstract level but it should be resolved by the library functions offered.
- It is mentioned before that there are several ways, A1 and A2, to start a process.
   For method A1 the requesting process can fork itself and let the forked child perform an 'exec' call to activate the disk image. This mechanism should then be implemented in each process which needs to start other processes. To avoid this a specialised process is defined to do just that. A start-up daemon will be introduced to centralise the starting of processes from disk images.
   For method A2 it is essential that the requested process is already active. It should, however, not be active with its normal functionality but it should be active as a daemon. Such a daemon should, on request, fork itself. The forked child will be activated as the process requested. To generalise matters it is probably wise to incorporate this daemon mechanism for each chipcard transaction server process.
- It is wise to recognise that we can not predict the future. Therefore we can assume that changes will be made to the system in the (near) future. To minimise the impact of changes to the software it is good policy to make things configurable. To manage such configurable items a configuration manager will be introduced.
- It is possible that transaction server processes need to make use of functionality which is not performed by any of the specific process types mentioned before and of which a single entity must be used by multiple transaction server processes. Such a process will be called a general process. A general process is a single entity process type which offers its functionality to multiple chipcard transaction server processes.
- It is possible that the work which must be performed by an application is best divided over several processes. If this is the case then only one of these processes, the master or control process, can be named an application process. The other processes, which will be started by the application process, are called application sub processes. This also applies for other process types (e.g., resource manager), therefore the term application sub process is to specific. The generalised term for these processes is sub process.
   Among the processes which perform a particular task only one of these process may be of the type which covers that task. The other processes are called sub processes.
- For debugging and maintenance purposes it is desired that the chipcard transaction server software incorporates mechanisms for logging error and debug information. This will not be elaborated in here.
- Within the chipcard transaction server software there will probably be a need for some kind of timing mechanism. Adding an extra first group process which handles all timers within the transaction server processes could cause a severe increase in the number of messages sent within the transaction server 44. Therefore, in the most preferred embodiment, a choice is made to let each process contain its own timers. With this solution these local process timers must be driven by a timer clock pulse. For this reason a timer process is introduced. This process sends timer clock messages to all chipcard transaction server processes which have timers.

### 2 Chipcard transaction server processes

### 2.1 First and second group processes

Within the chipcard transaction server software there are two groups of processes. Both these groups are described in the sections below.

### 2.1.1 First group processes

This group of processes forms the backbone of the chipcard transaction server software. All first group processes should be present, no matter what the configuration of the chipcard transaction server is. A possible list of these processes and their function is given below.
1. Start-up Daemon SD, this process is the base process of the chipcard transaction server software. It takes care of starting all other first group processes and it will start second group processes on request of the system manager SM.
2. Configuration Manager CM, this process is used to retrieve the contents of configurable items. All chipcard transaction server processes, first and second group, should use this process to retrieve their configurable data.
3. Persistent Data Manager PDM, this process is meant to store data items which must be preserved over a power down of the system. In contrast with the configuration this data may only be changed by the chipcard transaction server software itself.
4. Error and Debug Logging, this process is used to log all error and debug information of all chipcard transaction server processes.
5. System Manager SM, this process is responsible for managing the second group processes of the chipcard transaction server. Which second group processes there are within the chipcard transaction server is obtained from the configuration manager CM.
6. Timer process TP, this process generates timer clock pulses and sends them to the subscribed chipcard transaction server processes.
7. Database process DB, this process is responsible for starting third party databases. As exception to other first group processes it is possible that this process is not started in case no database is used.

### 2.1.2 Second group processes

This group of processes forms the configurable part of the chipcard transaction server software. Which specific processes there will be is impossible to predict. But it is possible to define a hierarchy among these second group processes. This hierarchy is given in section 2.2 of this document.

### 2.2 Process sets, entities and types

To separate the second group processes from each other a hierarchy is defined. Within this hierarchy the terms 'process set', 'process entity' and 'process type' are used. The meaning of these terms is given in the sections below.

### 2.2.1 Process set

A process set is a collection of process entities which are all the same and which all perform a specific function within the chipcard transaction server (e.g., driving a voice response system (VRS) modem, managing security application modules (SAM's)).

### 2.2.2 Process entity

A process entity is a single UNIX process which is a member of a single process set. All process entities of a process set are identical.

### 2.2.3 Process type

A process type is used to identify the logical function of a process entity/set (e.g., driving a resource, managing a resource). Within the chipcard transaction server several process types are distinguished. All these process types are listed and described below.
1. Application Manager AM, which is used to manage application requests which originate at a particular source (e.g. VRS-AM, Direct modem-AM). Of each process set of the application manager type only one process entity may be active at a time.
2. Resource Manager RM, which is used to manage external resources which are needed by the chipcard transaction server software (e.g., SAM-RM, X.25-RM). Of each process set of the resource manager type only one process entity may be active at a time.
3. Resource Driver RD, which is used to drive a particular resource device or to implement a specific protocol stack layer of a communication protocol (e.g., BSK-RD, PASP-RD; BSK = device for accessing SAM's; PASP = remote device which controls revalue operations on an electronic purse). Of each process set of the resource driver type multiple process entities may be active at a time.
4. Application Process AP, which is a process which contains the functionality which should be activated on request from the outside world. Of each process set of the application process type multiple process entities may be active at a time.
5. Sub Process SP, a process which is a slave of another process, meaning that the master process is the only second group process which communicates with the sub process SP. Of each process set of the sub process SP type multiple process entities may be active at a time.
6. General Process GP, a process which contains functionality which is not covered by the other process types. Of each process set of the general process type only one process entity may be active at a time.

Below, in paragraphs 3 through 16 some of the most important processes will be described in more detail.

### 3. Start-up daemon description

The main function of the start-up daemon (SD) process is to start other processes from their disk image and to report the death of child processes to the system manager SM. Furthermore, the start-up daemon (SD) process is the process which is responsible for starting and stopping the first group processes. Every first group process must be activated. With the exception of the database process DB. It is possible to use the chipcard transaction server system without an operational database process DB. The starting of the database process DB depends on the existence of a configuration file of the database process DB. In case this file does not exist the database process DB is not started by the start-up daemon SD). The start-up daemon SD should keep an administration on the first group processes in order to be able to recognise if a deceased child, which causes a SIGCHLD signal to be sent to the start-up daemon SD, is a first or second group process. If the deceased child is a second group process then the start-up daemon SD must send a message to the system manager SM notifying it of the death of the process. If the child is a first group process then the start-up daemon SD should check if the death is caused by a regular system shutdown or an error and it should take the appropriate actions.

### 4. Configuration manager description

A configuration manager is needed for the handling of configurable items (e.g., the number of SAM's attached to the chipcard transaction server). The number of configurable items is not known at this time but the expectation is that the number grows with the lifetime of the system. In order to keep the configuration clear it is needed to group individual configuration items into configuration sets (e.g., all configuration items of a specific resource manager). This leads to the hierarchy depicted in figure 2.

Within this hierarchy an individual configuration item is identified by the combination of the identifier of the configuration set, which contains the item, and the identifier of the item within that set. Both the configuration set and the configuration item identifiers are strings.

The entire chipcard transaction server configuration should be stored somewhere and it must be possible to store several different chipcard transaction server configurations. This is useful for test purposes because a test configuration can differ in a major way from the standard chipcard transaction server configuration. The different chipcard transaction server configurations can be distinguished by placing them at their own specific location (for example a specific directory on a hard disk). To establish the possibility of having several chipcard transaction server configurations makes it mandatory that the configuration manager CM is told which chipcard transaction server configuration it must use.

Besides the things described above the main functionality of the configuration manager CM is to acquire the value of configuration items on request of the other processes within the chipcard transaction server.

### 5. Error and debug logging description

To be able to store all error/debug logging in a central place a logging server process is defined. This process will wait on its input mailbox for error and debug messages. For each of these messages copies are sent transparently to one or more selected output devices. The possible output devices are configurable. The device selection (which outputs are currently used) is configurable and can be changed runtime.

The error and debug logging process may not block on output devices.

During initialisation the configuration parameters are retrieved using the configuration manager CM interface.

### 6. Persistent data manager description

A persistent data manager is needed for storing data that must be preserved over a power down of the chipcard transaction server. The number of data items that must be preserved is not known at this time but the expectation is that the number grows with the lifetime of the system. These data items should only be stored and retrieved by the transaction server 44 itself, this in contrast to the configuration items who are only retrieved by the chipcard transaction server. The mechanism of sets and items, as used by configuration manager CM, is not used for the persistent data manager PDM. Instead a straightforward mechanism which only knows about items is used.

PDM data items are stored centrally but have a strictly scope, local to one process. However, a specific chipcard transaction server process owns a PDM data item and care should be taken that the owner of a data item is the only process which is allowed to store and retrieve the data item. This implies that the reference of a specific data item should include some process specific component in order to make it impossible for other processes to access it.

The entire chipcard transaction server persistent data set should be stored somewhere and it must be possible to store several different chipcard transaction server persistent data sets. This is useful for test purposes because a test persistent data set can differ in a major way from the standard chipcard transaction server persistent data set. The different chipcard transaction server persistent data sets can be distinguished by placing them at their own specific location (for example a specific directory on a hard disk). To establish the possibility of having several chipcard transaction server persistent data sets makes it mandatory that the configuration manager CM is told which chipcard transaction server persistent data set it must use. Therefore, the persistent data set that must be used is a configuration item.

### 7. System manager description

The main task of the system manager SM is controlling the load of the chipcard transaction server. To be able to do just that it is necessary that the system manager SM knows which processes are active within the system. This is achieved by making the system manager SM responsible for starting and stopping the second group processes. Now the system manager SM is aware of which processes are active within the chipcard transaction server it should prevent the chipcard transaction server from being overloaded. Assigning each process a number, which represents the load of that process can do this, and by defining the maximum allowed system load of the chipcard transaction server. Having done this the system manager SM is capable of preventing the starting of a process that would make the system load exceed its maximum. If this is the case then the system manager SM can reject the request or it can postpone the request until the system load allows the starting of the process.

A chipcard transaction server process must first attach to a process set before it can actually start an entity of that set. To ensure that this is done the system manager SM must be capable to detect that a start request is received prior to the attach request. This is accomplished by assigning a system manager generated identification to each process set. This process set identification is returned in the response message of an attach request. This returned process set identification must be used in subsequent start process requests for that particular set.

The attach service is used to make it possible to start daemon processes and in memory processes before they are actually used. If this is not done at initialisation time then it would be postponed until the first start request for that particular process set is received. This would cause the first start request to take considerably longer than subsequent start requests for that process set. Besides in memory processes single entity process types (application manager AM, resource manager RM and general process GP) are also started by the attach request for the same reason.

The start request is used to actually assign a process channel to the requester. For the process types (application manager AM, resource manager RM and general process GP) which can only have a single process entity, with just one channel, within a process set the start request is handled differently than for those process types (resource driver RD, application process AP and sub process SP) which can have multiple process entities, with multiple channels, within a process set. For the single entity process types subsequent start request are assigned to the same process entity. For multiple entity process types each subsequent start request will be assigned its own process channel. If there is no free channel available within the active process entities then a new process entity is created (only if the maximum number of process entities is not exceeded) and the first channel of the new process is assigned to the requester.

How process entities are created depends on which start-up method must be used for a particular process set. For starting methods A1 and A2 this means creating a new UNIX process and for starting method A3 it means assigning a free process entity.

To balance the operation of the system manager SM the counterpart services of the attach and start services, the detach and stop services, should be offered by the system manager SM.

The actions taken on a stop process request depend on the involved process type. For single entity process types a process is only de-assigned (e.g., a counter is decreased). For multiple entity process types, however, the involved channel is de-assigned. If after this none of the channels of the process entity are assigned and the process is not an in memory process (starting method A3) then the process entity is destroyed by sending a destroy message to it.

The actions to take for the detach service depends on the starting method of the process set. If method A2 is used then detaching means destroying the daemon process, for method A3 and for the single entity process types it means destroying all process entities. For method A1 no action is required because there are no processes running at detach time. Before the system manager SM performs the actual detach operation it should check if all processes of that set are stopped.

On start-up the system manager SM should attach the configured application manager AM processes. This will trigger the initialisation of the second group processes. For the shutdown of the system the system manager SM should only detach the application managers AM it has attached and then terminate itself.

To accomplish the described functionality the system manager SM must have knowledge of the configuration of the second group processes. This information is system dependent and therefore configurable. The configuration items which describe the second group processes are all stored within a single configuration set called the process configuration set.

### 8. Database process description

The function of the database process DB is to properly start and stop a third party database manager DBM. The database process DB is used as a limited abstraction layer between the database manager DBM and the chipcard transaction server software. The abstraction is limited to the configuration only. The communication between the database manager DBM and the applications which need access to the database is managed by the applications themselves and is not part of the database process DB. The database process DB is optionally started by the start-up daemon SD in case there exists a configuration file for the database process DB. When a configuration file is recognized by the start-up daemon SD, the database process DB is started and will be handled like any other first group process.

If the database process DB has to be started (DB configuration file exists), the configuration items will be read. These consist of the name of a start script and the name of a stop script. The database manager DBM will be started or stopped by executing those scripts.

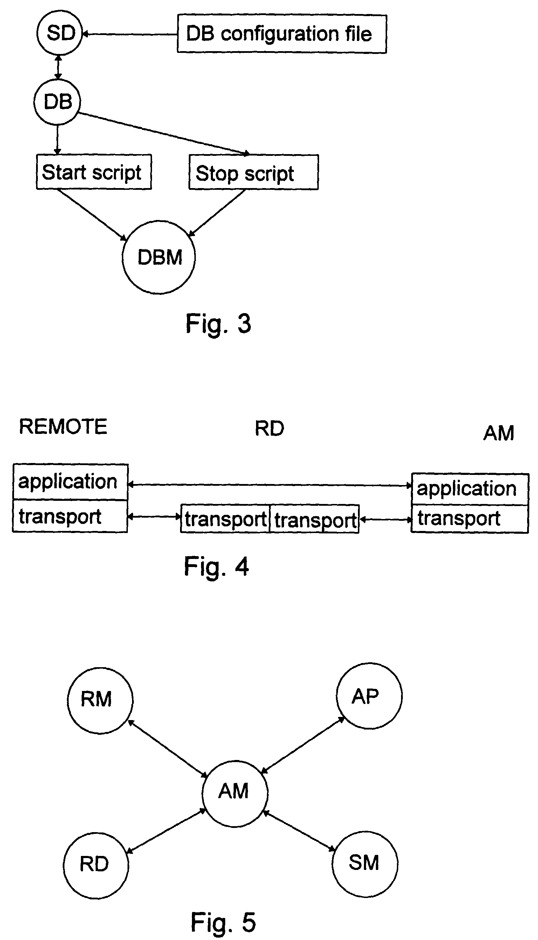

Figure 3 schematically shows functional interactions of the database process DB.

### 9. Application manager description

### 9.1 Functional description

The main function of an application manager AM is to offer remote system 2, 8, 20 the ability to start chipcard transaction server applications, using a dedicated interface for the remote system. Since different remote systems can have different communication protocols, different application managers AM can be defined. Each application manager AM is dedicated to handling application start requests from one specific system. Multiple applications of any supported application type can be started concurrently by an application manager AM. The application manager AM will monitor applications for malfunctioning and take appropriate measures. The communication between remote system 2, 8, 20 and application manager AM plays an important part in the working of an application manager AM, so that is covered first.

### 9.1.1 Remote system - application manager AM interaction

A remote system (e.g. voice response system VRS 36) is able to start an application in the chipcard transaction server. This application is running an undetermined time until it completes by itself, in which case the remote system is informed of this and an application result is passed to the remote system. The remote system is able to cancel a started application before it completes by itself. In that case an application result is passed, with the information that the application was cancelled. An application is able to pass on intermediate results to the remote system during the time it is running.

An application manager AM manages all applications started by one remote system. The application manager AM starts an application on request of the remote system and passes on information between the two.

Since multiple applications may run concurrently, the application manager AM will maintain multiple concurrent connections from the remote system to the started applications. The following information is to be kept in the application manager AM to handle each application instance.
1. application type
   (e.g., devalue, revalue,...)
2. application specific data
   dependent on application type
3. remote system Id
   identification of remote system
4. remote system application Id
   identification of application within remote system
5. application state
   behaviour of application manager AM is application state dependent
6. application Id
   identification of application within the transaction server

The following messages between remote system and application manager AM are defined:

### Remote system -> application manager AM:

- StartApplication
   Start chipcard transaction server application
- StopApplication
   Stop chipcard transaction server application

### Application manager AM -> remote system

- ApplicationProgress
   passes application progress data to remote system during application lifetime.
- ApplicationCompletion
   indicates application has terminated and contains application result data.

The application manager AM interfaces via a Resource Driver RD to the remote system. The diagram of figure 4 shows the protocol layer stacks involved in the communication between remote system and application manager AM.

The diagram of figure 4 shows that the resource driver RD will interpret messages up to transport level and that a different transport layer protocol is used to forward the messages to the application manager AM. In this chapter we define the RD-AM transport protocol and the application layer protocol. The RD-AM protocol will be based on the generic message mechanism. This protocol offers the ability to send/receive messages using mailboxes, and the data part then contains an application layer message of the types defined above.

### 9.1.2 Application manager AM processing

The application manager AM needs services from a number of other chipcard transaction server processes to do its tasks. For starting a chipcard transaction server application it needs the system manager SM. To receive application start requests from a remote system it needs a connection with that system via a resource driver RD. The application manager AM needs to interface with a resource manager RM to establish a connection with a resource driver RD. Furthermore, the application manager AM will communicate with the started application processes. The diagram of figure 5 shows the application manager process interfaces.

### 10. Resource manager description

The main goal of a resource manager RM is to manage the available resources of a distinct type (e.g. modems). Other chipcard transaction server processes can claim resources from a resource manager RM. The resource manager RM can accept or reject the claim for a resource. If the claim is accepted then the resource manager RM ensures that the claimed resource will not be assigned to anyone else but to the process whose claim was accepted. If a process, which has claimed a particular resource, does no longer need the resource it should release it. If this is done then the resource manager RM is free to assign that resource to another process if requested. Chipcard transaction server processes can claim only single resources. The mechanism used to claim a resource is based on the fact that resources are part of a set. Within a set it is possible to claim a random resource or a specific resource.

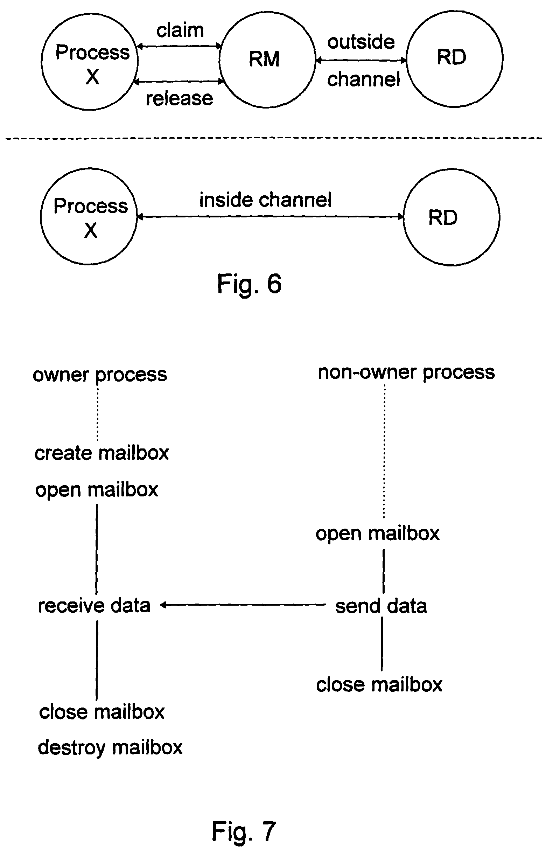

A resource is accessed by means of a resource driver RD channel. Such a channel has an inside and an outside connection. The outside of the channel is the connection from the resource driver RD to the resource while the inside is the connection from the resource driver RD to the process that claimed the resource. The claim resource request takes care of connecting the outside of the claimed channel to the resource. The inside of the channel should be connected by the process who claimed the resource, with the connect inside request. The request/response sequence of claiming, connecting, disconnection and releasing a resource is shown in Figure 6.

Besides the claiming and releasing of resources, the resource manager RM should offer a variety of management functions such as taking resources offline and retrieving status information about the connected resources. Most of these functions are resource type specific and therefore not resource manager RM general.

### 11. Resource driver description

A resource driver RD, the link between the outside world and the chipcard transaction server, is capable of communicating with an entity that is not part of the chipcard transaction server. The mechanism used for such communication is highly dependent on the medium used for the communication and on the outside world entity.

The main goal of a resource driver RD is to translate the outside world communication method and protocol into the one that is used inside the chipcard transaction server, and vice versa. The actual meaning of the data that is involved is of no interest for the resource driver RD and the resource driver RD does therefore not interpret it. However, a resource driver RD is responsible for establishing and maintaining a transparent link with the outside world.

### 12. Application Process description

An application process AP is a process that implements the functionality needed to perform a service offered by the chipcard transaction server. These services differ significantly from each other. As a result the individual application processes AP also differ significantly.

After creation and initialisation an application process AP should, just as any other process, send a 'Create process response message' to the system manager SM. After sending this response the application process AP should wait for the 'Start application message' notification from the application manager AM. This notification contains data needed by the application process AP to start executing its service specific functionality. Although the fact that from here on the application process AP performs service specific operations it uses the general mechanisms for communicating with other chipcard transaction server processes such as resource managers RM and resource drivers RD. Beside this, an application process AP should offer the possibility to provide the application manager AM with intermediate application results to report the progress to the process which activated it. After completion, successful or not, the application process AP must notify the initiating process of the result of the application. This must be done by means of the 'Application result message' interface.

### 13. Sub process description

When a piece of chipcard transaction server functionality is best implemented in multiple processes instead of a single process then one of these multiple processes is called the master process while the other processes are called sub processes SP. The master process within the group will be of the chipcard transaction server process type that identifies the functionality performed by the entire process group. All general process interfaces and the general process data are used by a sub process SP.

### 14. Start-up/Shutdown mechanism

This chapter describes the chipcard transaction server software start-up and shutdown sequences. Since no application process may be interrupted at any time especially the shutdown should be performed in a graceful manner.

### 14.1 System start-up

The chipcard transaction server software is started by starting the start-up daemon SD. During its initialisation the start-up daemon SD will create its own input mailbox and that of the error and debug logging process and then it will create the other first group processes (in the sequence of configuration manager CM, error and debug logging process, persistent data manager PDM and system manager SM). Each process, with the exception of error and debug logging process, creates its own input mailbox and gives it to the start-up daemon SD. At this point the start-up daemon (SD) process has finished initialisation and will wait at its input mailbox for messages. After initialisation the error and debug logging process, configuration manager CM and persistent data manager processes will also wait on their input mailboxes for messages to arrive from other processes. The system manager SM, however, will retrieve the second group process configuration from the configuration manager CM and it will send an attach process request to itself for each configured application manager AM. After this, system manager SM will enter the message processing loop. What happens next is that the system manager SM will receive an application manager attach request message and will send a create request message to the start-up daemon (SD) process. The start-up daemon SD will fork and execute the image file of the application manager AM. The creation of the application managers AM is carried out concurrently, because the system manager SM will read another application manager AM attach process request from its input mailbox after sending an attach message to the start-up daemon SD.

When in application manager AM is created it will send attach process requests to the system manager SM for each second group process set it needs to interface with during its lifetime to do its job. From the reported processes some have to be created by a daemon process as indicated by the configuration. The system manager SM will create those daemon processes that are necessary to satisfy future start requests from the application manager AM. Then the application manager AM will send a start request for each attached process, which is needed immediately by the application manager AM, and waits for a response from the system manager SM before sending the next request. Depending on the process type and configuration the system manager SM will send a create request to the start-up daemon SD (process not created by a daemon) or to a specific daemon process. The system manager SM will create a process only if it was not already running. After this the application manager AM will connect all channels which are used to receive application requests from. Having done this the application manager AM is initialised and it will send a create process response to the system manager SM. The system manager SM marks the application manager AM as being fully attached in its administration.

### 14.2 System shutdown

The shutdown of the system should be done in a graceful manner. No application process may be aborted, all should end normally. The following scenario is used to perform a system shutdown.

A destroy process request or shutdown request is received by the system manager. The system manager detaches all known application managers AM. Detaching an application manager AM means sending a destroy process request to it. Upon receiving the destroy process request an application manager AM will prevent new applications from being started. When there are no more active applications within an application manager AM the application manager AM will release all resources claimed, stop all processes started and detach all attached processes. If this is done the application manager AM will exit. This causes a destroy process response message to be sent to the system manager SM. This mechanism is the exact opposite of the start-up mechanism and the result is that all second group process are destroyed when the last application manager AM has terminated. This means that, after receiving the fast (AM) destroy process response the system manager SM can exit. Since the system manager SM is a child of the start-up daemon SD, the start-up daemon SD will receive a signal and will know (by UNIX process id) that the system manager SM has terminated. Consequently, the start-up daemon SD will now terminate the other first group processes (error and debug logging process, configuration manager CM and persistent data manager PDM) by sending a destroy process request. The start-up daemon SD will wait for their termination signals before the start-up daemon SD terminates itself.

### 15. Inter Process Communication and Event Handling

Among the chipcard transaction server processes several inter process communication methods can be used. In order not to burden the programmer with such details an abstract inter process communication mechanism is defined here. This abstract mechanism, called mailbox, is described in section 15.1. As defined in paragraph 2.1 a process has a single point in its program where it waits for a-synchronous communication. Besides the inter process communication with other processes a process may also have to react on other a-synchronous triggers such as timers. All incoming triggers (e.g., messages, timers) are called events within the chipcard transaction server software. Within the chipcard transaction server software a general mechanism is used for dealing with events. This mechanism, called event handling, is described in section 15.2.

### 15.1 Mailbox mechanism

A mailbox is an object used to send data from one process to another process. From the highest level of abstraction it is of no interest which inter process communication method is used. This means that all possible inter process communication methods should be incorporated in the mailbox object. A mailbox is owned (created) by the process which uses the mailbox to receive data. The high level operations which should be available on mailboxes are listed below.
1. create mailbox, within the chipcard transaction server software this creates a mailbox of a specific type and it returns a mailbox descriptor which holds, among other things, the address of the mailbox (this is the inter process communication address of the underlying inter process communication mechanism). This operation is meant for a process which intends to use the mailbox for input.
2. open mailbox, this operation performs the necessary actions needed to be able to transmit/receive data through a mailbox.
3. send data, this operation is used to send data to the process which owns the used mailbox.
4. receive data, this operation is used by the owner of the mailbox to receive data.
5. close mailbox, this operation is the counter part of the 'open mailbox' operation.
6. destroy mailbox, this operation is the counter part of the 'create mailbox' operation.

Figure 7 depicts the operations which may be performed by the owner and non- owners of a mailbox.

With what is described above processes are able to communicate with each other. This, however, is not enough. In order to use the MCP mechanism it is necessary to communicate with a specific channel of a process.

Therefore, a channel number should be incorporated in the mailbox. If this is done then it is possible to identify a process channel with a mailbox.

### 15.2 Event Handling

Within a chipcard transaction server process an event is a trigger from outside the process which indicates that something specific occurred. Due to the fact that an event represents some specific occurrence the reaction of a process to an event should also be specific. In other words there is a close relation between an event and the action taken. Within the chipcard transaction server software event tables define the relation between the events and the actions to be taken. Some high level event table operations, which are listed below, are defined for working with event tables.
1. create event table, this operation creates an empty event table.
2. add event to table, this operation adds an event and the action to be taken to an event table.
3. remove event from table, this operation removes an event and the action to be taken from an event table.
4. destroy event table, this operation destroys an event table.
5. process events from table, this operation waits for events and executes the defined actions of the events of an event table.

### 16. General functioning of the system.

In this paragraph, the functioning of the system will be described in general terms. The functioning of the transaction server processes differ in dependence on whether they belong to the first group processes or second group processes. The first group processes, i.e., Start-up Daemon SD, Configuration Manager CM, Error and Debug Logging Process, Timer Process TP, Persistent Data Manager PDM, DataBase DB and System Manager SM, are started in accordance with a fixed start-up sequence, starting with the start-up daemon SD, which starts the other processes one by one, and ending with the system manager SM. Afterwards, the system manager SM is the process which starts second group processes on demand. To get things started, the system manager SM reads its configuration file to determine which application managers AM to run, and sends a process start request for each application manager AM to itself.

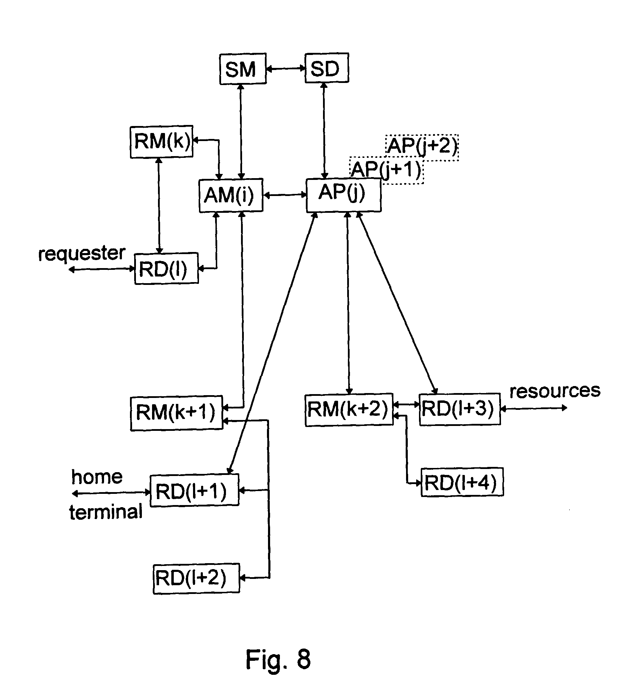

Figure 8 shows a typical configuration of second group processes. Although in figure 8, an application AP(j) has been shown to be within the transaction server 44, application (AP(j) may also be located in remote processors arranged to communicate with the transaction server 44. It is also noted that several applications may be running at the same time for one transaction to be carried out. This has been schematically indicated by further applications AP(j+1), AP(j+2) drawn in dotted lines behind AP(j). Each one of these further applications may be running on the transaction server 44 itself or on a remote processor, as required.

For carrying out a second group process, the system manager SM receives a start request from a (remote) requesting system, the requester, for a specified transaction process. Upon receiving that request, the system manager SM will start the second group process by requesting the start-up daemon SD to do all necessary actual loading and starting. The start-up daemon SD will pass the first group processes mailbox addresses to the second group process when it is started.

The system manager SM assigns an appropriate application manager AM(i), i = 1, 2, 3, ..., for carrying out interfacing tasks between the requester and one or more application processes AP. For instance, requests coming from a voice response system are to be handled by a VRS-AM whereas requests from a WEB server are to be handled by an Internet-AM. The application manager AM is dedicated to provide an interface to support the initiating of transactions and possibly for the type of connection that is used to interface with the remote system requesting the application process AP to be carried out. Within one single second group process there may be a plurality of applications AP(j), j = 1, 2, 3, . . . . , to be run.

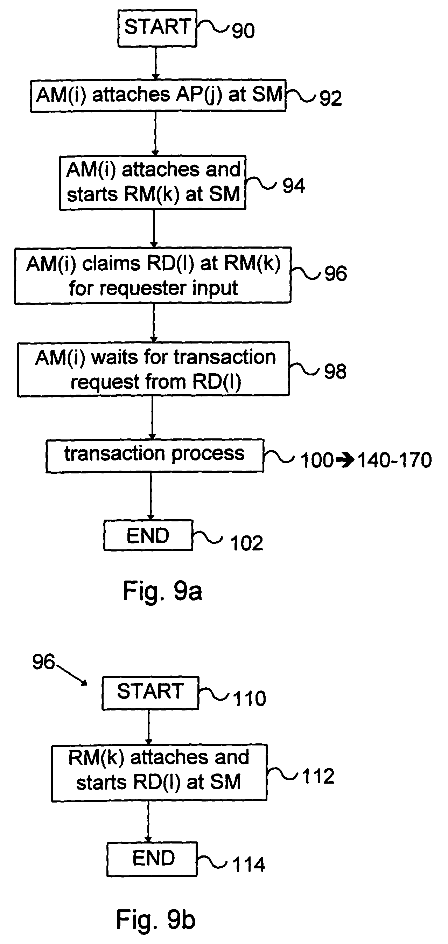

Starting a resource manager RM and an application AP(j) by an in-memory starting method carried out by application manager AM(i) is shown in figure 9a.

After being started, step 90, the application manager AM(i) attaches all applications AP(j), AP(j+1), AP(j+2), ... at the system manager SM, step 92. The applications AP to be attached depend on the AM configuration file.

Then, in step 94, the application manager AM(i) attaches and starts resource manager RM(k) at the system manager SM.

In step 96, the application manager AM(i) claims a resource driver RD(ℓ) at RM(k) to be able to communicate with the requester. Thus requester input will be received through the resource driver RD(ℓ).

In step 98, the application manager AM(i) will wait for receipt of a transaction request from resource driver RD(ℓ).

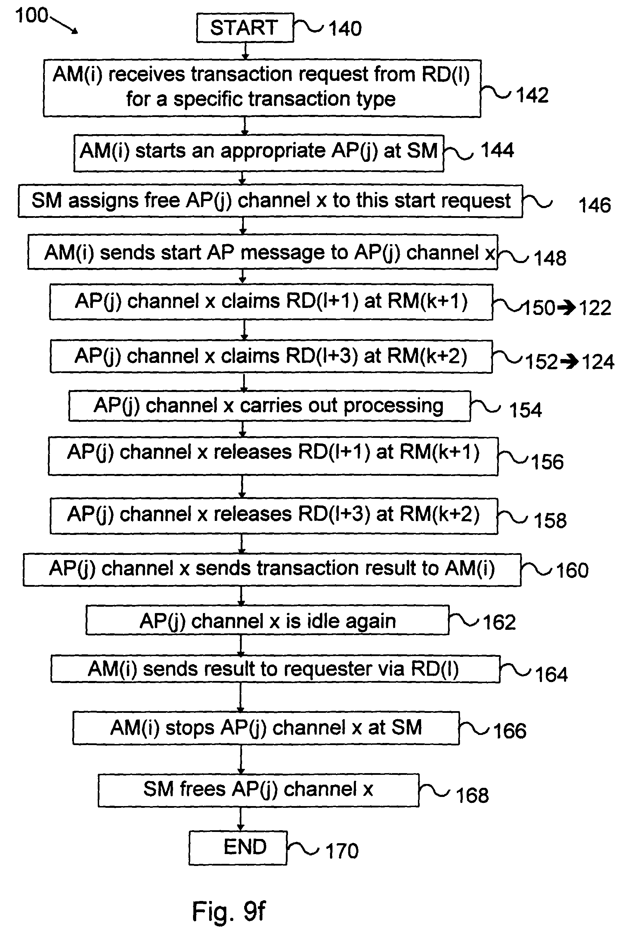

After having received such a transaction request, in step 100, the transaction process will be carried out. The transaction process will be further explained hereinafter with reference to steps 140-170 in figure 9f.

After having received the transaction request from RD(ℓ), step 142, the dedicated application manager AM(i) starts the application process AP(j) at system manager SM in step 144. Thus, application manager AM(i) implements the application independent part of the high level protocol used to communicate between the requester of the transaction and the internal application process AP which will eventually perform the application specific part of the transaction. Partitioning the system this way has the benefit that the same application process AP(j) can be used to handle transaction requests coming from different application manager AM's, e.g., VRS-AM's and Internet-AM's referred to above.

During initialisation, application manager AM(i) reads from its configuration file which applications AP are supported for the requester's system, and 'attaches' these APs by communicating with system manager SM. No application process AP can run until a transaction request from the requester is received. This two way starting sequence (attach, start) enables the system manager SM to support different configurable starting methods, i.e., InMemory, ByDaemon and FromDisk. With the InMemory starting method a process is loaded into memory prior to the actual transaction start. For processes which are started with the ByDaemon starting method the system manager SM will load a daemon process into memory which will fork into a child process and a parent process when the transaction is started. The child will do the transaction process while the parent lives a s a daemon. With the FromDisk starting method the loading and starting is postponed until the actual transaction is started.

Preferably, each application process AP is structured as a so called 'multi channel' process, maintaining separate data for each channel. Because of the complete asynchronous communication with other processes one application process AP can handle multiple transactions in parallel with only one execution thread. Each application process AP has one input mailbox in which messages are received from other processes. The communication address of a process is composed of such a mailbox address and a channel number. The mailbox address identifies a specific application process AP in the system. The channel number addresses a specific channel within the application process AP. The channel allocation is done by the system manager SM, as shown in step 146.

The concurrent transaction capacity is determined by two application process AP configuration items: maximum number of applications AP and number of channels per application process AP. At the time the number of concurrent transactions exceeds the number of channels per application process AP an other, identical multichannel application process AP is started by the system manager SM (completely transparent to the dedicated application manager AM) to allocate the new channel. The total number of concurrent channels at one time is limited to the product of the maximum number of identical applications AP and the number of channels per application process AP (assuming each application process AP has an equal number of channels).

Depending on the kind of processing an application process AP will do, configurations can range from all transactions processed by one application process AP up to a configuration where each transaction is processed by a separate application process AP (AP(j), AP(j+1), AP(j+2), . . . ).

In order to really start the channel x, the application manager AN(i) sends a start AP message to channel x; step 148.
After step 148 has been made, a connection must be made between application process AP(j) and the remote system from which the request originated. The remote system is, e.g., home terminal 8, 20 allowing communications controlled by chip card 6 (see figure 1). To that end, in step 150, AP(j) channel x requests a further appropriate resource manager RM(k+1) to allocate a resource driver for interfacing with the home terminal. Resource manager RM(k+1) allocates e.g. resource driver RD(ℓ+1), whereas resource driver RD(ℓ+2) which is able to perform the same task remains idle.

Depending on the type of communication required there may be a different resource manager RM, e.g., a "modem RM", a "TCP/IP RM" (TCP/IP = Transmission Control Protocol/Internet Protocol), etc. When the resource manager RM is a "modem RM" then the resource driver RD is of the type "modem RD", whereas if the resource manager RM is a "TCP/IP RM" then the resource driver RD will be allocated from a set of " "TCP/IP RD's".

Since the appropriate resource driver RD carries out the interfacing tasks with the home terminal, from the application process AP(j's) standpoint of view there is no difference in communicating with the home terminal connected through e.g. Internet or PSTN.

Note that in figure 8 there is assigned a separate resource driver RD(ℓ) to receive the transaction request from the requester whereas a separate resource driver RD(ℓ+1) is assigned to communicate with the home terminal during carrying out the transaction process itself. However, in practice, the resource drivers may be the same and all communications may be carried out through one telecommunication line.

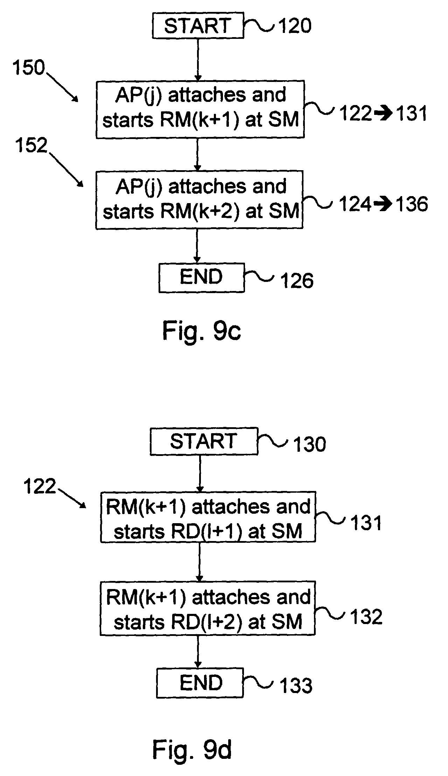

When the application program AP(j) channel x claims resource driver RD(ℓ+1) at resource manager RM(k+1), step 150, the application program AP(j) attaches and starts the resource manager RM(k+1) at the system manager SM. This has been shown in step 122 in figure 9c. Then, as shown in step 131 in figure 9d, the resource manager RM(k+1) attaches and starts the resource driver RD(ℓ +1) at the system manager SM.

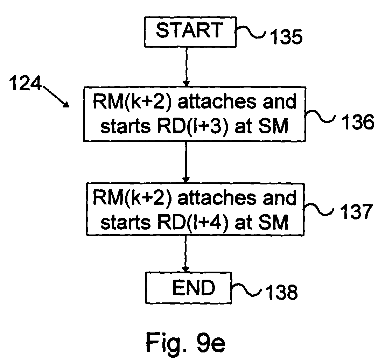

In the example of figure 8, only one resource driver RD(ℓ+1) is attached. If a further resource driver RD(ℓ+2) would be necessary, the same step would be carried out for that resource driver, as shown in step 132 in figure 9e.

If application manager AM(i) is a VRS-AM it will allocate a resource driver RD of the type "modem RD" by means of a "modem RM", whereas if application manager AM(i) is an Internet-AM, resource driver RD will be allocated from a set of "TCP/IP RD's" through a "TCP/IP RM" (TCP/IP - Transmission Control Protocol / Internet Protocol).
Depending on the type of transaction/application the application process AP needs (remote) resources to perform its processing. For instance, for reloading of a chip card's electronic purse a connection with a banking system is needed. Therefore, connections have to be made with remote systems and/or local devices. Now, as shown in step 106, application process AP(j) requests an appropriate resource manager RM, e.g. resource manager RM(k+2), to allocate one or more appropriate resource drivers RD to access resources. E.g., resource driver RD(ℓ+3) is allocated by resource manager RM(k+2), whereas resource driver RD(ℓ+4) remains idle.

For carrying out the step 152, the application program AP(j) attaches and starts resource manager RM(k+2) at the system manager, as shown in step 124. When started the resource manager RM(k+2) attaches and starts resource driver RD(ℓ+3) at the system manager, as shown in step 136.

If a further resource driver would have been necessary, e.g. resource driver RD(ℓ+4) would have been attached and started at the system manager SM, as shown in step 137.

Then, in step 154, the application program AP(j) channel x carries out the processing related to the transaction process requested.

After the process has finished, in step 156, the application program AP(j) channel x releases resource driver RD(ℓ+1) at the resource manager RM(k+1). Channel x does the same with the resource driver RD(ℓ+3) at the resource manager RM(k+2) in step 158.

In step 160 the application program AP(j) channel x sends the transaction result to the application manager AM(i), step 160. Then, the application process AP(j) channel x is idle again, as shown in step 162.

In step 164, application manager AM(i) reports the results to the requester through resource driver RD(ℓ).

Then the application manager AM(i) stops the AP(j) channel x at the system manager SM, as shown in step 166. Then, the system manager SM frees the AP(j) channel x, step 168. This finishes the transaction portion carried out by the server 44.
After completing the processing, application process AP(j) sends the transaction result to application manager AM(i) and the application process AP(j) channel which has carried out the application process is idle again, step 108.
In step 110, application manager AM(i) reports the results to the requester through resource driver RD(ℓ). This finishes the transaction portion carried out by the server 44.

Below, one example of an application within the server framework defined above is illustrated: a revalue purse application (par. 17).

### 17. Revalue purse application.

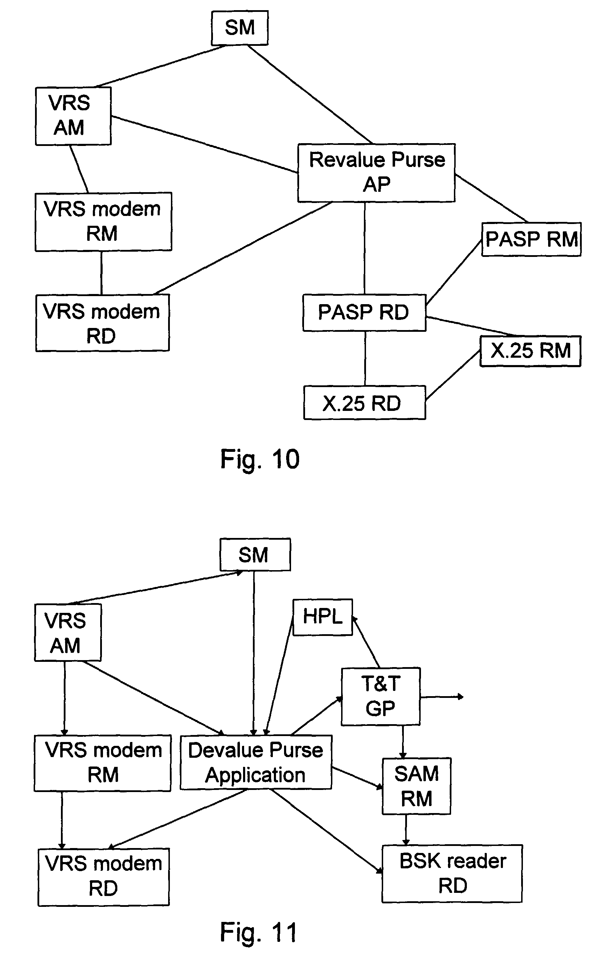

This chapter defines the processes involved in an example related to revaluing an electronic purse.
The application is built on top of the chipcard transaction server application framework defined above.
The revalue purse application once running needs two interfaces with the outside world. First it needs a connection with a chipcard terminal and at the other end a connection with an Electronic Money Issuer (EMI).
The following use case will identify all processes needed. Reference is made to figure 10; some processes of the chipcard transaction server application framework are left out. In figure 10, 'PASP' refers to a remote system which controls the revalue operations on a chipcard with purse facility.
Whenever a revalue application instantiate request comes in at the VRS-AM a VRS modem for communication with, e.g., a home terminal needs to be assigned. The request message includes the home terminal type id of the device at the other side of the modem connection (e.g Telechipper, LineChipper, . . . ). To interface with a VRS modem a VRS modem resource driver is needed. All VRS modem resource drivers are managed by a voice response system VRS modem RM (= resource manager). VRS-AM asks the VRS modem RM for a free modem, specifying the initial device settings dependent on home terminal type Id. The VRS-AM gets the input Mailbox of a resource driver returned. The voice response system VRS needs to know which modem from the modem pool was assigned, so an identification of which modem was selected is returned to the voice response system VRS. Then the VRS-AM will ask the system manager SM to start a revalue purse application. If the system manager SM honours the request it will create a revalue purse application and returns the input mailbox of the revalue purse application to the VRS-AM (depending on process start-up method a new process is created by either start-up daemon SD or Revalue Daemon process or a free channel is allocated in a multichannel revalue process). The VRS-AM will then send a start application message to the revalue purse process, containing the input mailbox of the allocated VRS modem RD and some data received with the application start request from voice response system VRS, like amount to be revalued and so on. The revalue purse application needs to open a connection to PASP (EMI) via the PASP resource manager. If granted then an input mailbox of a PASP resource driver will be returned to the revalue purse process. All PASP connections are multiplexed onto one logical X.25 channel by the PASP resource driver. The PASP resource driver itself allocates a X.25 resource driver via the X.25 resource manager and is able to determine when to open/close the X.25 connection, depending on its use and costs. By not combining X.25 RD/RM and the PASP RD/RM into one RD/RM set the X.25 RD/RM can be used by different processes which may need a different open/close strategy and/or no multiplexing. Now, the revalue process has all required resources to carry out its task, i.e. revalue purse on chipcard in connected home terminal.

### Most important acronyms and definitions.

- AM =: application manager:
process in the server framework assigned to an external source able to start application(s) on the server; an application manager decouples the source from the application(s) and converts the external protocol to the server internal protocol and vice versa;
- AP =: application process:
a process which contains the functionality which should be activated upon request from a source outside the server;
- CM =: configuration manager:
process in the server to handle configurable items in order to minimise the impact of changes to the software;
- DB =: database process:
process for starting third party databases; first group processes: the non-configurable part of the server software which should be present no matter what the configuration of the server software is, including start-up daemon, configuration manager, persistent data manager, error and debugging logging, system manager, timer process, and database process;
- GP =: general process:
a process which contains functionality which is not covered by the other process types;
- mailbox:: an object used to send data from one process to another process;
- PDM =: persistent data manager:
process to store data items which must be preserved over a power down of the system;
- process entity:: a single (UNIX) process which is a member of a single process set; all process entities of a process are identical;
- process set:: a collection of process entities which are all the same and which perform a specific function within the server software;
- process type:: identification of the logical function of a process entity/set, e.g., application manager, resource manager, resource driver, application process, sub process, and general process;
- RD =: resource driver:
process to drive an or part of an application outside the server; it converts data flow and converts the external protocol to the server internal protocol and vice versa;
- RM =: resource manager:
process to manage the assignment of resources, i.e., it claims and releases resources;
- second group processes:: processes that are related to a requested transaction and form the configurable part of the server software;
- SD =: start-up daemon:
process in the server to centralise starting of processes from disk images; it starts all first group processes and also second group processes upon request of the system manager;
- SP =: sub process:
a slave of another process;
- SM =: system manager:
process in the server framework deciding whether it is allowed to start an application by tracking the load of the system; it ensures that resources, like memory, will not exhaust by the starting of an application; moreover, it prevents swapping processes to disk;
- TP =: timer process:
process for generating timer clock pulses and sending pulses to subscribes server processes, such that each process has its own timer.

## Claims

1. Transaction server (44) for carrying out at least one transaction upon request by at least one remote system (2; 8; 20), comprising:
- starting means (SD, SM) for starting at least one application process (AP) upon receiving a transaction request;
- interface means (AM, RM, RD) for interfacing between said at least one remote system (2; 8; 20) and said at least one application process (AP);
wherein said starting means comprises:
- first starting means (SD) for starting processes in a first group of processes which all have a specific non-applicational supporting task;
- second starting means (SM) which is started by the first starting means (SD) and is arranged for starting one or more processes in a second group of processes which are related to the transaction request and form a configurable part of the server software.

2. Transaction server according to claim 1 wherein the second starting means are arranged for dedicating a channel in a first multichannel process (AP) for carrying out application tasks related to the transaction request.

3. Transaction server according to claim 1 or 2, wherein said second starting means are arranged for starting a second multichannel process identical to said first multichannel process when all channels of the first multichannel process have been dedicated.

4. Transaction server according to one of the preceding claims, comprising one or more application manager means (AM(i)), each one of them being arranged for interfacing between said at least one remote system (2; 8; 20) and said at least one application process (AP), and for carrying out application independent parts of a transaction request received.

5. Transaction server according to claim 4 comprising a plurality of resource driver means (RD(ℓ), RD(ℓ+1), . . . ) for carrying out interface tasks between said at least one remote system and at least one application manager means (AM(i)), and comprising a plurality of resource manager means (RM(k), RM(k+1), . . .) for dedicating one or more of said plurality of resource driver means (RD(ℓ), RD(ℓ+1), . . . ) upon request by said at least one application manager means (AM(i)).

6. Transaction server according to claim 5, wherein said at least one application manager means (AM(i) is arranged to dedicate one (RD(ℓ+1)) or more of said plurality of resource driver means for carrying out direct interfacing tasks between said at least one application process means (AP) and said remote system (2; 8; 20) after having received said transaction request.

7. Transaction server according to any of the preceding claims wherein said at least one application process means (AP) is arranged to request one (RM(k+2)) of said plurality of resource manager means to dedicate one (RD(ℓ+1)) or more of said plurality of resource driver means for carrying out direct interfacing tasks between said at least one application process means (AP) and one or more resources.

8. Transaction server according to any of the preceding claims being arranged for carrying out at least one of the following set of chipcard related transaction requests:
- to revalue an electronic purse;
- to devalue an electronic purse;
- to carry out a chipcard related identification;
- to buy a ticket, and
- to save bonus points.

9. Method for carrying out at least one transaction upon request by at least one remote system (2; 8; 20) on a transaction server (44), comprising the following processes:
- a starting process for starting at least one application process upon receiving a transaction request;
- an interfacing process for interfacing between said at least one remote system (2; 8; 20) and said at least one application process;
wherein said starting process comprises: - a first starting process for starting processes in a first group of processes which all have a specific non-applicational supporting task;
- a second starting process which is started by the first starting process and is arranged for starting one or more processes in a second group of processes which are related to the transaction request and form a configurable part of the server software.

10. Method according to claim 9 wherein the second starting process is arranged for dedicating a channel in a first multichannel process for carrying out application tasks related to the transaction request.

11. Method according to claim 9 or 10, wherein said second starting process is arranged for starting a second multichannel process identical to said first multichannel process when all channels of the first multichannel process have been dedicated.

12. Method according to claim 9, 10 or 11 comprising one or more application manager processes, each one of them being arranged for interfacing between said at least one remote system (2; 8; 20) and said at least one application process, and for carrying out application independent parts of a transaction request received.

13. Method according to claim 12 comprising a plurality of resource driver processes for carrying out interface tasks between said at least one remote system and at least one application manager process, and comprising a plurality of resource manager processes for dedicating one or more of said plurality of resource driver processes upon request by said at least one application manager process.

14. Method according to claim 13 wherein said at least one application manager process is arranged to dedicate one or more of said plurality of resource driver processes for carrying out direct interfacing tasks between said at least one application process and said remote system (2; 8; 20) after having received said transaction request.

15. Method according to any of the claims 9-14 wherein said at least one application process is arranged to request one of said plurality of resource manager processes to dedicate one or more of said plurality of resource driver processes for carrying out direct interfacing tasks between said at least one application process and one or more resources.

16. Method according to any of the claims 9-15 being arranged for carrying out at least one of the following set of chipcard related transaction requests:
- to revalue an electronic purse;
- to devalue an electronic purse;
- to carry out a chipcard related identification;
- to buy a ticket, and
- to save bonus points.
